(19) Europäisches Patentamt
European Patent Office
Office européen des brevets

(11) EP 3 296 346 A1

(12) **EUROPEAN PATENT APPLICATION**
published in accordance with Art. 153(4) EPC

(43) Date of publication:
**21.03.2018 Bulletin 2018/12**

(21) Application number: **16796250.5**

(22) Date of filing: **19.04.2016**

(51) Int Cl.:
***C08J 3/16*** $^{(2006.01)}$ ***C08J 3/02*** $^{(2006.01)}$
***C08J 3/12*** $^{(2006.01)}$ ***C08L 81/02*** $^{(2006.01)}$
***C08L 101/02*** $^{(2006.01)}$ ***C09D 5/02*** $^{(2006.01)}$
***C09D 181/04*** $^{(2006.01)}$

(86) International application number:
**PCT/JP2016/062352**

(87) International publication number:
**WO 2016/185856 (24.11.2016 Gazette 2016/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.05.2015 JP 2015100052**

(71) Applicant: **DIC Corporation**
**Tokyo 174-8520 (JP)**

(72) Inventors:
- **ENOMOTO Yuya**
  **Sakura-shi**
  **Chiba 285-8668 (JP)**
- **TAKAHASHI Masaharu**
  **Ichihara-shi**
  **Chiba 290-8585 (JP)**
- **NARA Saori**
  **Ichihara-shi**
  **Chiba 290-8585 (JP)**
- **OTA Katsumi**
  **Takaishi-shi**
  **Osaka 592-0001 (JP)**
- **NAKAMURA Takamitsu**
  **Takaishi-shi**
  **Osaka 592-0001 (JP)**

(74) Representative: **TBK**
**Bavariaring 4-6**
**80336 München (DE)**

(54) **POLYARYLENE SULFIDE DISPERSION, FINE PARTICLES, METHOD FOR PRODUCING POLYARYLENE SULFIDE DISPERSION, AND METHOD FOR PRODUCING FINE PARTICLES**

(57) There is provided a polyarylene sulfide dispersion coated with a cationic group-containing organic polymer compound and having high dispersion stability and excellent adhesion or adhesiveness to any one of substrates of plastic, metals, glass, and the like even at a high polyarylene sulfide resin concentration. The object is solved by providing a polyarylene sulfide dispersion including polyarylene sulfide particles, which are coated with a cationic group-containing organic polymer compound by a base precipitation method and thus exhibit high stability even at a high concentration, and also providing powder particles (fine particles) produced from the dispersion.



Printed by Jouve, 75001 PARIS (FR)

## Description

### Technical Field

The present invention relates to polyarylene sulfide powder particles (fine particles) coated with a cationic group-containing organic polymer compound, a polyarylene sulfide dispersion containing the particles, and a method for producing them.

### Background Art

A polyarylene sulfide (may be abbreviated as "PAS" hereinafter) resin has excellent mechanical strength, heat resistance, chemical resistance, moldability, and dimensional stability, and by using these characteristics, the resin is used for materials of electric/electronic equipment components and automobile components, and the like.

On the other hand, the polyarylene sulfide resin is poor in adhesion or adhesiveness to other materials and thus has an aspect that expansion of applications is not promoted. In the coating material field, adhesive material field, coating field, and polymer compound field, if polyarylene sulfide fine particles and a polyarylene sulfide dispersion liquid can be formed, demand is expected to be high. However, it is difficult to produce fine particles and a dispersion liquid which satisfy the requirements for adhesion or adhesiveness.

There have been proposed several methods as a method for producing PAS fine particles and a dispersion liquid.

Patent Literature 1 and Patent Literature 3 propose a production method for producing a fine particle dispersion liquid, in which a polyarylene sulfide resin is heated and dissolved in an organic solvent in the presence of an inorganic salt, then polyarylene sulfide coarse particles are precipitated by cooling to prepare a suspension, and then a surfactant is added to the suspension, followed by grinding.

Patent Literature 2 proposes a polyarylene sulfide resin fine particle dispersion liquid including a polymer surfactant, polyarylene sulfide resin fine particles, and an alcohol solvent.

However, a dispersion liquid including PAS fine particles produced by the related art described above has a low effective component concentration and has difficult in forming a coating material having a polyarylene sulfide concentration sufficient for forming a coating film, thereby failing to produce a desired coating film.

### Citation List

#### Patent Literature

PTL 1: Japanese Unexamined Patent Application Publication No. 2009-173878
PTL 2: Japanese Unexamined Patent Application Publication No. 2011-122108
PTL 3: Japanese Unexamined Patent Application Publication No. 2012-177010

### Summary of Invention

#### Technical Problem

Accordingly, a problem to be solved by the present invention is to provide polyarylene sulfide powder particles (fine particles) coated with a cationic group-containing organic polymer compound and having high dispersion stability even at a high concentration of polyarylene sulfide resin and having excellent adhesion or adhesiveness to any one of substrates of plastics, metals, glass, and the like, and to provide a dispersion liquid including the particles.

#### Solution to Problem

As a result of earnest investigation for solving the problem, the inventors found that a polyarylene sulfide dispersion including polyarylene sulfide particles having high stability at a high concentration can be produced by coating the particles with a cationic group-containing organic polymer compound by a base precipitation method, and the problem can be solved, leading to the achievement of the present invention.

That is, the present invention relates to the following.

(1) A polyarylene sulfide dispersion containing polyarylene sulfide particles, a cationic group-containing organic polymer compound, an acid, and an aqueous medium, wherein the polyarylene sulfide particles are coated with the

cationic group-containing organic polymer compound.

(2) The polyarylene sulfide dispersion described in (1), wherein the main skeleton of the cationic group-containing organic polymer compound is at least one selected from the group consisting of a (meth)acrylate ester resin, a (meth)acrylate ester-styrene resin, a (meth)acrylate ester-epoxy resin, a vinyl resin, a urethane resin, and a polyamide-imide resin.

(3) The polyarylene sulfide dispersion described in (1) or (2), wherein the main skeleton of the cationic group-containing organic polymer compound is at least one selected from the group consisting of a (meth)acrylate ester resin, a (meth)acrylate ester-styrene resin, and a (meth)acrylate ester-epoxy resin.

(4) The polyarylene sulfide dispersion described in any one of the items (1) to (3), wherein the cationic group-containing organic polymer compound has an amine value of 40 to 300 mgKOH/g.

(5) The polyarylene sulfide dispersion described in any one of the items (1) to (4), wherein an acid used for neutralizing a cationic group in the cationic group-containing organic polymer compound is at least one acid selected from the group consisting of inorganic acids, sulfonic acid, carboxylic acids, and vinylic carboxylic acids.

(6) The polyarylene sulfide dispersion described in any one of the items (1) to (5), wherein the dispersed particle diameter of the polyarylene sulfide particles in the polyarylene sulfide dispersion is 1 $\mu$m or less.

(7-1) Polyarylene sulfide powder particles (fine particles) produced by drying the polyarylene sulfide dispersion described in any one of the items (1) to (6).

(7-2) Powder particles (fine particles) which is a drying product of the polyarylene sulfide dispersion described in any one of the items (1) to (6).

(7-3) Polyarylene sulfide powder particles (fine particles) coated with a cationic group-containing organic polymer compound.

(8) A method for producing a polyarylene sulfide dispersion, including:

a step (A) [heating dissolution step] of heating polyarylene sulfide in an organic solvent to prepare a solution;
a step (B) [crystallization step] of adding the polyarylene sulfide solution prepared in the step (A) to an aqueous resin solution prepared by adding and dissolving a cationic group-containing organic polymer compound in water, forming polyarylene sulfide fine particles;
a step (C) [base precipitation step] of depositing the cationic group-containing organic polymer compound on the surfaces of the polyarylene sulfide fine particles by reacting the polyarylene sulfide fine particles produced in the step (B) with a base, thereby precipitating polyarylene sulfide particles coated with a cationic group-containing organic polymer;
a step (D) [wet cake forming step] of filtering out and washing the polyarylene sulfide particles coated with the cationic group-containing organic polymer produced in the step (C), thereby producing a wet cake of the polyarylene sulfide particles coated with a hydrous cationic group-containing organic polymer; and
a step (E) [dispersion forming step] of reacting the wet cake of the polyarylene sulfide particles coated with the hydrous cationic group-containing organic polymer produced in the step (D) with an acid, thereby producing a dispersion including the polyarylene sulfide particles coated with the cationic group-containing organic polymer compound.

(9) The method for producing a polyarylene sulfide dispersion described in (8), wherein the organic solvent used in the step (A) is at least one organic solvent selected from N-methyl-2-pyrrolidone, 1-chloronaphthalene, and 1,3-dimethyl-2-imidazolidinone.

(10) A method for producing polyarylene sulfide powder particles, including:

a step (A) [heating dissolution step] of heating polyarylene sulfide in an organic solvent to prepare a solution;
a step (B) [crystallization step] of adding the polyarylene sulfide solution prepared in the step (A) to an aqueous resin solution prepared by adding and dissolving a cationic group-containing organic polymer compound in water, forming polyarylene sulfide fine particles;
a step (C) [base precipitation step] of depositing the cationic group-containing organic polymer compound on the surfaces of the polyarylene sulfide fine particles by reacting the polyarylene sulfide fine particles produced in the step (B) with a base, thereby precipitating polyarylene sulfide particles coated with a cationic group-containing organic polymer;
a step (D) [wet cake forming step] of filtering out and washing the polyarylene sulfide particles coated with the cationic group-containing organic polymer produced in the step (C), thereby producing a wet cake of the polyarylene sulfide particles coated with a hydrous cationic group-containing organic polymer; and
a step (F1) [powder forming step] of drying the wet cake of the polyarylene sulfide particles coated with the hydrous cationic group-containing organic polymer produced in the step (D), thereby producing polyarylene sulfide powder particles coated with the cationic group-containing organic polymer compound.

(11) A method for producing polyarylene sulfide powder particles, including:

a step (A) [heating dissolution step] of heating polyarylene sulfide in an organic solvent to prepare a solution;
a step (B) [crystallization step] of adding the polyarylene sulfide solution prepared in the step (A) to an aqueous resin solution prepared by adding and dissolving a cationic group-containing organic polymer compound in water, forming polyarylene sulfide fine particles;
a step (C) [base precipitation step] of depositing the cationic group-containing organic polymer compound on the surfaces of the polyarylene sulfide fine particles by reacting the polyarylene sulfide fine particles produced in the step (B) with a base, thereby precipitating polyarylene sulfide particles coated with a cationic group-containing organic polymer;
a step (D) [wet cake forming step] of filtering out and washing the polyarylene sulfide particles coated with the cationic group-containing organic polymer produced in the step (C), thereby producing a wet cake of the polyarylene sulfide particles coated with a hydrous cationic group-containing organic polymer;
a step (E) [dispersion forming step] of reacting the wet cake of the polyarylene sulfide particles coated with the hydrous cationic group-containing organic polymer produced in the step (D) with an acid, thereby producing a dispersion including the polyarylene sulfide particles coated with the cationic group-containing organic polymer compound; and
a step (F2) [powder forming step] of drying the dispersion including the polyarylene sulfide particles coated with the cationic group-containing organic polymer compound produced in the step (E), thereby producing polyarylene sulfide powder particles coated with the cationic group-containing organic polymer.

(12) The method for producing a polyarylene sulfide powder particles described in (10) or (11), wherein the organic solvent used in the step (A) is at least one organic solvent selected from N-methyl-2-pyrrolidone, 1-chloronaphthalene, and 1,3-dimethyl-2-imidazolidinone.
(13) The method for producing a polyarylene sulfide dispersion described in (8), wherein after the step (B) [crystallization step], a dispersion liquid (may be expressed as a "crystallization liquid" of the polyarylene sulfide fine particles produced in the step (B) is mechanically ground [dispersion step].
(14) The method for producing a polyarylene sulfide powder particles described in (10) or (11), wherein after the step (B) [crystallization step], a dispersion liquid (may be expressed as a "crystallization liquid" of the polyarylene sulfide fine particles produced in the step (B) is mechanically ground [dispersion step].
(15) A polyarylene sulfide dispersion produced by the production method described in (8) or (13).
(16) Polyarylene sulfide powder particles produced by the production method described in (10), (11), or (14).
(17) An electrodeposition liquid containing the polyarylene sulfide dispersion described in any one of the items (1) to (6) and (15).
(18) A coating material using the polyarylene sulfide dispersion described in any one of the items (1) to (6) and (15).
(19) A coating film produced by using the polyarylene sulfide dispersion described in any one of the items (1) to (6) and (15).

Advantageous Effects of Invention

According to the present invention, it is possible to provide polyarylene sulfide particles (fine particles) coated with a cationic group-containing organic polymer compound and having high stability even at a high concentration of polyarylene sulfide resin and having excellent adhesion or adhesiveness to any one of substrates of plastics, metals, glass, and the like, and to provide a dispersion liquid including the particles. It is also possible to provide an electrodeposition liquid and a coating material each using the dispersion produced in the present invention.

Description of Embodiments

Embodiments of the present invention are described in detail below.
Polyarylene sulfide particles contained in a polyarylene sulfide fine particle dispersion liquid are produced by dispersing a polyarylene sulfide resin as fine particles in an aqueous medium using a cationic group-containing organic polymer compound. A method for dispersing the polyarylene sulfide fine particles is described in detail later.
The aqueous medium may be either water alone or a mixed solvent containing water and a water-soluble solvent.

•Polyarylene sulfide resin

The polyarylene sulfide resin used in the present invention has a resin structure having a structure as a repeating unit in which an aromatic ring and a sulfur atom are bonded to each other, and specifically a structural part as a repeating

unit represented by formula (1) below,

[Chem. 1]

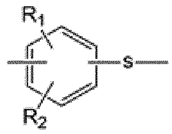

(1)

(in the formula, $R^1$ and $R^2$ each independently represent a hydrogen atom, an alkyl group having 1 to 4 carbon atoms, a nitro group, an amino group, a phenyl group, a methoxy group, or an ethoxy group).

In the structural part represented by the formula (1), $R^1$ and $R^2$ in the formula are particularly preferably hydrogen atoms in view of the mechanical strength of the polyarylene sulfide resin. In this case, the structural part is preferably a para-position bond type represented by formula (2) below.

[Chem. 2]

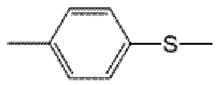

(2)

In particular, in view of heat resistance and crystallinity of the polyarylene sulfide resin, preferred is a structure represented by the structural formula (2) in which a sulfur atom is bonded to an aromatic ring at the para-position in the repeating unit. Also, a mixture of a para-position bond structure and a meta-position bond structure or a mixture of a para-position bond structure and an ortho-position bond structure can be used.

The present invention can use a para-meta PPS copolymer or the like produced as in examples described later.

The polyarylene sulfide resin may contain not only the structural part represented by the formula (1) but also structural parts represented by structural formulae (3) to (6) below at 30 mol% or less of the total containing the structural part represented by the formula (1).

[Chem. 3]

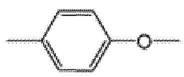

(3)

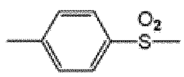

(4)

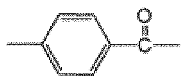

(5)

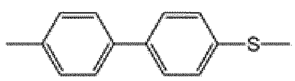

(6)

In the present invention, the amount of the structural parts represented by the formulae (3) to (6) is particularly preferably 10 mol% or less in view of heat resistance and mechanical strength of the polyarylene sulfide resin. When the polyarylene sulfide resin contains the structural parts represented by the formulae (3) to (6), the bonding form may be either a random copolymer or a block copolymer.

Also, the polyarylene sulfide resin may have, in its macular structure, a trifunctional structural part represented by formula (7) below or a naphthylsulfide bond.

[Chem. 4]

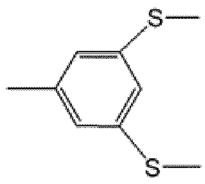

(7)

However, the amount thereof is preferably 3 mol% or less and particularly preferably 1 mol% or less relative to the total number of moles including the other structural parts.

Examples of a method for producing the polyarylene sulfide resin include, but are not particularly limited to, 1) a method of polymerizing a dihalogeno-aromatic compound, a polyhalogeno-aromatic compound, and if required, another copolymerization component in the presence of sulfur and sodium carbonate; 2) a method of polymerizing a dihalogeno-aromatic compound, a polyhalogeno-aromatic compound, and if required, another copolymerization component in a polar solvent in the presence of a sulfidizing agent or the like; 3) a method of self-condensing p-chlorothiophenol and, if required, another copolymerization component; and the like. Among these methods, the method 2) is general and preferred. During reaction, an alkali metal salt of carboxylic acid or sulfonic acid may be added or alkali hydroxide may be added for adjusting the degree of polymerization. In particular, the method 2) is preferably a method for producing a polyarylene sulfide resin in which a hydrous sulfidizing agent is introduced into a mixture containing a heated organic polar solvent, a dihalogeno-aromatic compound, and a polyhalogeno-aromatic compound at a rate that allows water to be removed from the reaction mixture, and the dihalogeno-aromatic compound, the polyhalogeno-aromatic compound, and the sulfidizing agent are reacted in the organic polar solvent while the amount of water in the reaction system is controlled within a range of 0.02 to 0.5 moles relative to 1 mole of the organic polar solvent (refer to Japanese Unexamined Patent Application Publication No. 07-228699). Also, preferred is a production method in which a dihalogeno-aromatic compound, a polyhalogeno-aromatic compound, an alkali metal hydrosulfide, and an organic acid alkali metal salt are reacted in the presence of a solid alkali metal sulfide and an aprotic polar organic solvent while the amount of the organic acid alkali metal salt is controlled to be 0.01 to 0.9 moles per mole of sulfur source, and the amount of water in the reaction system is controlled within a range of 0.02 moles per mole of the aprotic polar organic solvent (refer to WO2010/058713 pamphlet). Examples of the dihalogeno-aromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenoic acid, 2,4-dihalobenzoic acid, 2,5-dihalonitrobenzene, 2,4-dihalonitrobenzne, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and these compounds in each of which the aromatic ring has an alkyl group having 1 to 18 carbon atoms as a nuclear substituent. Examples of the polyhalogeno-aromatic compound include 1,2,3-trihalobenzene, 1,2,4-trihalobenzene, 1,3,5-trihalobenzene, 1,2,3,5-tetrahalobenzene, 1,2,4,5-tetrahalobezene, 1,4,6-trihalobenzene, and the like. A halogen atom contained in each of the compounds is preferably a chlorine atom or a bromine atom.

A post-treatment method for the reaction mixture containing the polyarylene sulfide resin produced by the polymerization step is not particularly limited. Examples thereof include (1) a method in which after the completion of polymerization reaction, first the solvent is distilled off, under reduced pressure or normal pressure, directly from the reaction mixture or after addition of an acid or base, and then the solid after the solvent is distilled off is washed one or two or more times with water, the reaction solvent (or an organic solvent having the same solubility for a low-molecular polymer), and a solvent such as acetone, methyl ethyl ketone, alcohol, or the like, and further neutralized, washed with water, filtered out, and dried; (2) a method in which after the completion of polymerization reaction, solid products such as polyarylene sulfide, inorganic salts, and the like are sedimented by adding, as a sedimentation agent to the reaction mixture, water or a solvent such as acetone, methyl ethyl ketone, alcohol, ether, halogenated hydrocarbon, aromatic hydrocarbon, aliphatic hydrocarbon, of the like (a solvent soluble in the polymerization solvent used and is a poor solvent for at least the polyarylene sulfide), and the solids are filtered out, washed, and dried; (3) a method in which after the completion of polymerization reaction, the reaction solvent (or an organic solvent having the same solubility for a low-molecular polymer) is added to the reaction mixture and stirred, and then a low-molecular-weight polymer is removed by filtration, washed one or two or more times with water and a solvent such as acetone, methyl ethyl ketone, alcohol, or the like, then neutralized, washed with water, filtered out, and dried; and the like.

In the post-treatment methods described as examples above in (1) to (3), the polyarylene sulfide resin may be dried in vacuum, air, or an inert gas atmosphere such as nitrogen or the lie.

Also, the polyarylene sulfide resin can be oxidatively crosslinked by heat treatment in an oxidizing atmosphere having an oxygen concentration within a range of 5% to 30% by volume or under a reduced-pressure condition.

Further, the physical properties of the polyarylene sulfide resin are not particularly limited as long as the effect of the present invention is not impaired, but are as follows.

(Melt viscosity)

The polyarylene sulfide resin used in the present invention preferably has a melt viscosity (V6) within a range of 0.1 to 1000 [Pa·s] measured at 300°C, and because the balance between flowability and mechanical strength is improved, the melt viscosity is more preferably within a range of 0.1 to 100 [Pa·s] and particularly preferably within a range of 0.1 to 50 [Pa·s].

(Non-Newtonian index)

The non-Newtonian index of the polyarylene sulfide resin used in the present invention is not particularly limited as long as the effect of the present invention is not impaired, but is preferably within a range of 0.90 to 2.00. When the linear polyarylene sulfide resin is used, the non-Newtonian index is preferably within a range of 0.90 to 1.50 ad more preferably within a range of 0.95 to 1.20. Such a polyarylene sulfide resin has excellent mechanical physical properties, flowability, and abrasion resistance. However, the non-Newtonial index (N value) is a value calculated from a shear rate and shear stress measured by using Capilograph at 300°C under the condition of a ratio of orifice length (L) to orifice diameter (D) of L/D = 40 according to a formula below.
[Math. 1]

$$SR = K \cdot SS^{N} \quad (II)$$

[wherein SR represents a shear rate (second$^{-1}$), SS represents a shear stress (dyne/cm$^2$), and K represents a constant]. It is indicated that with a N value closer to 1, the structure of PAS is closer to linear, and with a higher N value, the degree of branching of the structure is increased.

In production examples described later, a polyphenylene sulfide resin is described as an example of the PAS resin which can be used in the present invention.

[Production of PAS dispersion]

Next, a PAS dispersion is described in detail. In the present invention, the term "PAS dispersion" represents a PAS dispersion prepared by a step (A) [heating dissolution step] of heating and dissolving the PAS resin together with a solvent, a step (B) [crystallization step] of forming PAS fine particles by adding a PAS resin solution to an aqueous solution of a cationic group-containing organic polymer compound, which is previously prepared, a step (C) [base precipitation step] of coating the surfaces of the PAS fine particles with the cationic group-containing organic polymer compound by deposition with a base, a step (D) [wet cake forming step] of producing a wet cake of the PAS particles coated with a hydrous cationic group-containing organic polymer compound by filtering out and water-washing the PAS particles coated with the cationic group-containing organic polymer compound, and a step (step (E), dispersion forming step) of neutralizing and re-dispersing the wet cake with an acid.

[Heating dissolution step] (Step A)

In order to produce the PAS dispersion, first, the PAS resin is dissolved in a solvent. In this step, an inorganic salt may be added or may not be particularly added. Examples of the form of the PAS resin which can be used in the present invention include, but are not particularly limited to, a powder, granules, pallets, fibers, a film, a molded product, and the like, and a powder, granules, and pellets are preferred from the viewpoint of operationality and a shortened time required for dissolution. Among these, a PAS resin powder is particularly preferably used. In general, the PAS resin and the solvent are charged in a vessel and subjected to dissolution regardless of the order of charging into the vessel.

The vessel used is preferably a pressure-resistant vessel because it is used under a high temperature.

The atmosphere in the vessel may be an air atmosphere or an inert gas atmosphere, but the inert gas atmosphere is preferred because of the need to avoid an atmosphere which reacts with the PAS resin and an atmosphere which degrades the PAS resin.

Examples of inert gas include nitrogen gas, carbon dioxide, helium gas, argon gas, neon gas, krypton gas, xenon gas, and the like. In view of economy and easy availability, nitrogen gas, argon gas, and carbon dioxide gas are preferred, and nitrogen gas or argon gas is more preferably used.

The inorganic salt is not particularly limited, but a chloride, a bromide, a carbonate, a sulfate, and the like of an alkali metal, an alkaline-earth metal, ammonia, and the like are generally used. Examples thereof include chlorides such as sodium chloride, lithium chloride, potassium chloride, calcium chloride, magnesium chloride, ammonium chloride,

and the like; bromides such as sodium bromide, lithium bromide, potassium bromide, calcium bromide, magnesium bromide, ammonium bromide, and the like; carbonates such as sodium carbonate, potassium carbonate, lithium carbonate, calcium carbonate, magnesium carbonate, ammonium carbonate, and the like; sulfates such as calcium sulfate, sodium sulfate, potassium sulfate, lithium sulfate, magnesium sulfate, ammonium sulfate, and the like. The chlorides such as sodium chloride, lithium chloride, potassium chloride, calcium chloride, magnesium chloride, ammonium chloride, and the like are preferred. These can be used alone or in combination of two or more.

When the inorganic salt is added, the ratio by weight of the inorganic salt to the PAS resin is within a range of 0.1 to 10 parts by mass and preferably within a range of 0.5 to 5 parts by mass relative to 1 part by mass of PAS.

The solvent is not particularly limited as long as it dissolves the PAS resin, and is, for example, at least one solvent selected from halogen-based solvents such as chloroform, bromoform, methylene chloride, 1,2-dichloroethane, 1,1,1-trichloroethane, chlorobenzene, o-dichlorobenzene, p-dichlorobenzene, 2,6-dichlorotoluene, 1-chloronaphthalene, hexafluoroisopropanol, and the like; N-alkylpyrrolidinone-based solvents such as N-methyl-2-pyrrolidinone, N-ethyl-2-pyrrolidinone, and the like; N-alkylcaprolactam-based solvents such as N-methyl-ε-caprolactam, N-ethyl-ε-caprolactam, and the like; polar solvents such as 1,3-dimethyl-2-imidazolidinone, N,N-dimethylacetamide, N,N-dimethylformamide, hexamethylphosphoric acid triamide, dimethyl sulfoxide, dimethyl sulfone, tetramethylene sulfone, and the like, and is preferably at least one solvent selected from N-methyl-2-pyrrolidone, 1-chloronaphthalene, o-dichlorobenzene, and 1,3-dimethyl-2-imidazolidinone. Among these, N-methyl-2-pyrrolidone, 1-chloronaphthalene, and 1,3-dimethyl-2-imidazolidinone are preferably used in view of workability and water solubility.

The ratio by weight of the PAS resin to the solvent is not particularly limited as long as the solvent dissolves the PAS, but is, for example, within a range of 0.1 to 20 parts by mass, preferably 0.1 to 10 parts by mass, and more preferably 0.1 to 5 parts by mass relative to 100 parts by mass of the solvent. In order to dissolve the PAS resin, the temperature of the reaction mixture is increased to a temperature necessary for dissolving the PAS resin.

The temperature necessary for dissolution depends on the solvent used, but is preferably 150°C or more, more preferably 200°C or more, and still more preferably 250°C or more. The upper limit is equal to or lower than a temperature which does not cause decomposition of the PAS resin, and is preferably 400°C or less. If required, the dissolution is performed under pressure.

The temperature permits the PAS resin to be uniformly dissolved and PAS coarse particles to be stably produced.

Also, the reaction solution may be stirred or not stirred, but is preferably stirred because the time required for dissolution can be shortened.

The reaction solution is preferably maintained for a while after being heated to a predetermined temperature. The retention time is within a range of 10 minutes to 10 hours, preferably 10 minutes to 6 hours, and more preferably 20 minutes to 2 hours.

This operation allows the PAS resin to be more sufficiently dissolved.

Next, the steps for producing the polyarylene sulfide dispersion of the present invention based on the polyarylene sulfide solution prepared as described above and for producing the polyarylene sulfide powder particles using the dispersion are sequentially described in detail.

[Crystallization step] (Step B)

First, an aqueous solution of a cationic group-containing organic polymer compound is prepared in advance.

Examples of the main skeleton of the cationic group-containing organic polymer compound include a (meth)acrylate ester resin, a (meth)acrylate ester-styrene resin, a (meth)acrylate ester-epoxy resin, a vinyl resin, a urethane resin, and a polyamide-imide resin. The cationic group-containing organic polymer compound used in the present invention may be a single compound or a mixture of one or more cationic group-containing organic polymer compounds. The solution prepared in an acid state can be used for the PAS dispersion and PAS powder particles of the present invention.

The cationic group-containing organic polymer compound is completely dissolved in an acid aqueous solution. Preferred examples of the acid used include inorganic acid materials such as hydrochloric acid, sulfuric acid, nitric acid, phosphoric acid, and the like, and organic acid materials such as sulfonic acids, such as methanesulfonic acid, ethanesulfonic acid, p-toluenesulfonic acid, and the like, and carboxylic acids, such as acetic acid, formic acid, oxalic acid, acrylic acid, methacrylic acid, ascorbic acid, Meldrum's acid, and the like. These can be used alone or in combination of two or more. In order to completely dissolve the resin, the amount of the acid for dissolving the cationic group-containing organic polymer compound is more preferably 70% to 300% relative to the amine value of the cationic group-containing organic polymer compound.

Also, the cationic group-containing organic polymer compound having an amine value of 40 to 300 mgKOH/g is preferably used.

The cationic group-containing organic polymer compound used may be synthesized by a method described in production examples below or may be a commercial product. Examples of the commercial product include Acrydic WPL-430 (manufactured by DIC Corporation) and the like.

In the present invention, even when the surfaces of the PAS particles are partially or entirely coated with the cationic group-containing organic polymer compound, an effect on dispersion stability can be obtained. Therefore, the cationic group-containing organic polymer compound is preferably used in an amount of 1 part by mass to 200 parts by mass relative to 100 parts by mass of PAS. In particular, the cationic group-containing organic polymer compound is preferably used in an amount of 5 parts by mass to 150 parts by mass because of the highest dispersion stability.

Next, a PAS dispersion liquid can be produced by pouring the PAS solution prepared as described above into the prepared aqueous solution of the cationic group-containing organic polymer compound.

The prepared aqueous solution of the cationic group-containing organic polymer compound is stirred at a high speed by using a stirrer such as a stirring blade or the like, forming a water flow. Regardless of whether the flow is turbulent or laminar, a higher circumferential speed is preferred because the crystallized particle size can be made fine.

The pouring rate of the PAS solution is preferably as low as possible because fine particles can be formed. The pouring method is, for example, a method of pouring the PAS solution directly into the prepared cationic group-containing organic polymer compound solution under strong stirring. In this case, stirring of the cationic group-containing organic polymer compound solution is preferably strong stirring in order to form the fine PAS particles.

Also, a step [dispersion step] can be performed, in which the resultant dispersion liquid (crystallization liquid) of the PAS fine particles produced after pouring the PAS solution is dispersed by mechanical grinding. Thus, better dispersion stability can be maintained. In this step, mechanical grinding can be performed by a method using a device described later in the item of "mechanical grinding device".

In the crystallization step, the PAS particles are considered to be in a state in which the cationic group-containing organic polymer compound is present on the surface layers of the PAS resin particles and are still not strongly adhered. This is because it is assumed that a terminal basic group of the cationic group-containing organic polymer compound is in an ionic bonding state to its counterpart, acid substance, and thus the cationic group-containing organic polymer compound is flexibly present on the surface layers of the PAS particles. In the base precipitation step as a subsequent step, base exchange reaction occurs between the functional group of the cationic group-containing organic polymer compound and the base, thereby adhering to the PAS surfaces.

[Base precipitation step] (Step C)

This step is a step in which the PAS resin particles produced in the crystallization step and having a water-soluble resin present on the surface layers thereof are base-precipitated with a base to form a slurry in which the PAS resin particles coated with the cationic group-containing organic polymer compound are precipitated.

This step can also be performed by adding an inorganic salt. When the inorganic salt is used, the type thereof is not particularly limited, but a chloride, a bromide, a carbonate, a sulfate, or the like of an alkali metal, an alkaline-earth metal, ammonia, or the like can be generally used. Examples thereof include chlorides such as sodium chloride, lithium chloride, potassium chloride, calcium chloride, magnesium chloride, ammonium chloride, and the like; bromides such as sodium bromide, lithium bromide, potassium bromide, calcium bromide, magnesium bromide, ammonium bromide, and the like; carbonates such as sodium carbonate, potassium carbonate, lithium carbonate, calcium carbonate, magnesium carbonate, ammonium carbonate, and the like; sulfates such as calcium sulfate, sodium sulfate, potassium sulfate, lithium sulfate, magnesium sulfate, ammonium sulfate, and the like. The chlorides such as sodium chloride, lithium chloride, potassium chloride, calcium chloride, magnesium chloride, ammonium chloride, and the like are preferred. These can be used alone or in combination of two or more. When the inorganic salt is used, the inorganic salt can be used at a ratio by weight of the inorganic salt to the PAS resin, for example, within a range of 1 to 5 parts by mass relative to 1 part by mass of PAS.

Examples of the base used in base precipitation include potassium hydroxide, sodium hydroxide, lithium hydroxide, and the like, and among these, potassium hydroxide is preferred.

The base concentration is required to be determined by the number of terminal substituents of the cationic group-containing organic polymer compound and is adjusted so that the pH in the system is 11 to 13, depending on the cationic group-containing organic polymer compound and PAS resin used.

[Wet cake forming step] (Step D)

This step is a step of forming a wet cake by filtering out the PAS resin particles coated with the cationic group-containing organic polymer compound from the slurry produced in the base precipitation step in which the PAS resin particles coated with the cationic group-containing organic polymer compound are precipitated. A filtering-out method may be any one of the methods such as filtration, centrifugal separation, and the like as long as the particles can be separated from a liquid. The amount of water in the wet cake filtered out is preferably within a range of 15% to 55%, and a preferred amount of water is 20% to 45% because with an excessively small amount of water, difficulty in softening by re-dispersion in the subsequent step results in low re-dispersibility. The wet cake is washed with ion exchange water,

distilled water, pure water, tap water, or the like in order to wash out the remaining organic solvent and the unprecipitated resin. The washing method may be filtration-washing with a washing solvent sprayed on the wet cake or washing by re-deflocculating the wet cake in a washing solvent.

[Dispersion forming step] (Step E)

The PAS dispersion can be formed by re-deflocculating the wet cake formed in the wet cake forming step in water by using a bead mill, an ultrasonic disperser, or the like, and then adjusting pH to 3 to 6 with the inorganic acid material, the organic acid material, or the like described above. The nonvolatile content in the resultant dispersion is 15% to 40%, and thus it is found that the present invention can provide a PAS dispersion at a remarkably high concentration because the nonvolatile content in a usual PAS dispersion is about 5% to 10%.

[Production of PAS powder particles] (Step F1 and Step F2)

Further, in the present invention, the term "PAS powder particles" represents cationic group-containing organic polymer compound-coated PAS powder particles produced by removing water from the wet cake formed in the step D or the PAS dispersion formed in the step E and then drying the residue. After drying, the powder particles can be used after being adjusted to a desired particle size by grinding with any one of various grinding devices.

A PAS coarse particle suspension in which the PAS coarse particles are dispersed is mechanically ground until the average particle diameter measured by a measurement method described below is 1 μm or less. Mechanical grinding is preferably performed until the average particle diameter is less than 500 nm. The mechanical grinding device is, for example, a commercial mechanical grinding device. In particular, examples of a preferred mechanical grinding device for efficiently dispersing and grinding the PAS coarse particles to produce a dispersion liquid of the PAS fine particles with a small particle diameter include a ball mill device, a bead mill device, a sand mill device, a colloid mill device, a Disper dispersion stirrer, a wet-type micronizing device (for example, Altimizer manufactured by Sugino Machine Co., Ltd., an ultrasonic disperser manufactured by Hielscher Inc., or the like). Among these, the device is preferably selected from a ball mill device, a bead mill device, a sand mill device, and a wet atomizer. Increases in the grinding force for mechanical grinding and the grinding time generally tend to decrease the average particle diameter of the resultant fine particles. However, the grinding force and grinding time are controlled within a proper range because excessive increases cause flocculation. For example, in the bead mill, they can be controlled by selecting the diameter and amount of beads and by adjusting the peripheral speed.

The PAS fine particle dispersion liquid may contain a precipitate. In this case, a precipitate portion and a dispersion portion may be separately used. When only the dispersion liquid is obtained, the precipitate portion may be separated from the dispersion portion by decantation, filtration, or the like. In addition, when finer particles are required, particles having a large particle diameter may be completely settled by centrifugal separation or the like, and the precipitate portion may be removed by decantation or filtration.

The PAS fine particle dispersion liquid produced in the present invention generally has no separation between the fine particles and the cationic group-containing organic polymer compound aqueous solution even when allowed to stand for 24 hours.

In view of the characteristics, the PAS fine particle dispersion liquid produced as described above becomes a useful additive in the coating material, adhesive, coating, and polymer compound fields.

EXAMPLES

The present invention is described in further detail below by giving examples, but the present invention is not limited to these examples.

[Production of PAS resin]

The method for producing the PAS resin used in the specification is described as production examples below.

(Production Example 1) Production of polyarylene sulfide resin (referred to as "PAS-1" hereinafter)

In a 150-L autoclave with a stirring blade and a bottom valve, to which a pressure gauge, a thermometer, and a condenser were connected, 14.148 kg of 45% sodium hydrosulfide (47.55 weight % NaSH), 9.541 kg of 48% sodium hydroxide (48.8 weight % NaOH), and 38.0 kg of N-methyl-2-pyrrolidne (may be abbreviated as "NMP" hereinafter) were charged. The temperature was increased to 209°C under stirring in a nitrogen stream, and 12.150 kg of water was distilled off (amount of remaining water of 1.13 moles per mole of NaSH). Then, the autoclave was closed and cooled

to 180°C, and 17.874 kg of para-dichlorobenzene (abbreviated as "p-DCB" hereinafter) and 16.0 kg of NMP were charged. The pressure was increased to a gauge pressure of 0.1 MPa by using nitrogen gas at a liquid temperature of 150°C, and the temperature increase was started. When the temperature was increased to 260°C, reaction was performed at 260°C for 2 hours while the upper portion of the autoclave was cooled by water sprinkling. The liquid temperature was kept constant so as not to be decreased during cooling of the upper portion of the autoclave. Next, the temperature was decreased, and cooling of the upper portion of the autoclave was stopped. The maximum pressure during reaction was 0.87 MPa. After the reaction, the autoclave was cooled, the bottom valve was opened at 100°C, and the reaction slurry was transferred to a 150-L plate-type filtration machine and filtered at 120°C under pressure. Then, 50 kg of 70°C hot water was added to the resultant cake, and the resultant mixture was stirred and then filtered. Further, 25 kg of hot water was added, and the resultant mixture was filtered. Next, the operation of adding 25 kg of hot water, stirring the resultant mixture for 1 hour, filtering the mixture, and then adding 25 kg of hot water and stirring the mixture was repeated two times. The resultant cake was dried at 120°C for 15 hours by using a hot-air circulating dryer, thereby producing PAS-1. The melt viscosity of the resultant PAS-1 was 10 Pa·s.

(Production Example 2) Production of polyarylene sulfide resin (referred to as "PAS-2" hereinafter)

In a 150-L autoclave with a stirring blade and a bottom valve, to which a pressure gauge, a thermometer, and a condenser were connected, 14.148 kg of 45% sodium hydrosulfide (47.55 weight % NaSH), 9.541 kg of 48% sodium hydroxide (48.8 weight % NaOH), and 38.0 kg of NMP were charged. The temperature was increased to 209°C under stirring in a nitrogen stream, and 12.150 kg of water was distilled off (amount of remaining water of 1.13 moles per mole of NaSH). Then, the autoclave was closed and cooled to 180°C, and 18.366 kg of p-DCB and 16.0 kg of NMP were charged. The pressure was increased to a gauge pressure of 0.1 MPa by using nitrogen gas at a liquid temperature of 150°C, and the temperature increase was started. When the temperature was increased to 260°C, reaction was performed at 260°C for 2 hours while cooling the upper portion of the autoclave by water sprinkling. The liquid temperature was kept constant so as not to be decreased during cooling of the upper portion of the autoclave. Next, the temperature was decreased, and cooling of the upper portion of the autoclave was stopped. The maximum pressure during reaction was 0.87 MPa. After the reaction, the autoclave was cooled, the bottom valve was opened at 100°C, and the reaction slurry was transferred to a 150-L plate-type filtration machine and filtered at 120°C under pressure. Then, 50 kg of 70°C hot water was added to the resultant cake, and the resultant mixture was stirred and then filtered. Further, 25 kg of hot water was added, and the mixture was filtered. Next, the operation of adding 25 kg of hot water, stirring the resultant mixture for 1 hour, filtering the mixture, and then adding 25 kg of hot water and stirring the mixture was repeated two times. The resultant cake was dried at 120°C for 15 hours by using a hot-air circulating dryer, thereby producing PAS-2. The melt viscosity of the resultant PAS-2 was 2.5 Pa·s.

(Production Example 3) Production of polyarylene sulfide resin (referred to as "PAS-3" hereinafter)

In a 150-L autoclave with a stirring blade and a bottom valve, to which a pressure gauge, a thermometer, and a condenser were connected, 14.148 kg of 45% sodium hydrosulfide (47.55 weight % NaSH), 9.541 kg of 48% sodium hydroxide (48.8 weight % NaOH), and 38.0 kg of NMP were charged. The temperature was increased to 209°C under stirring in a nitrogen stream, and 12.150 kg of water was distilled off (amount of remaining water of 1.13 moles per mole of NaSH). Then, the autoclave was closed and cooled to 180°C, and 17.464 kg of p-DCB and 16.0 kg of NMP were charged. The pressure was increased to a gauge pressure of 0.1 MPa by using nitrogen gas at a liquid temperature of 150°C, and the temperature increase was started. When the temperature was increased to 260°C, reaction was performed at 260°C for 2 hours while the upper portion of the autoclave was cooled by water sprinkling. The liquid temperature was kept constant so as not to be decreased during cooling of the upper portion of the autoclave. Next, the temperature was decreased, and cooling of the upper portion of the autoclave was stopped. The maximum pressure during reaction was 0.87 MPa. After the reaction, the autoclave was cooled, the bottom valve was opened at 100°C, and the reaction slurry was transferred to a 150-L plate-type filtration machine and filtered at 120°C under pressure. Then, 50 kg of 70°C hot water was added to the resultant cake, and the resultant mixture was stirred and then filtered. Further, 25 kg of hot water was added, and the resultant mixture was filtered. Next, the operation of adding 25 kg of hot water, stirring the resultant mixture for 1 hour, stirring the mixture, and then adding 25 kg of hot water and stirring the mixture was repeated two times. The resultant cake was dried at 120°C for 15 hours by using a hot-air circulating dryer, thereby producing PAS-3. The melt viscosity of the resultant PAS-3 was 52 Pa·s.

[Production of cationic group-containing organic polymer compound]

Examples of the method for producing the cationic group-containing organic polymer compound used in the specification are described below, but other cationic group-containing organic polymer compounds can be produced by

the same method.

(Production Example 4) Production of cationic group-containing organic polymer compound (KR-1)

In a reactor of an automatic polymerization reaction apparatus (polymerization tester DSL-2AS model, manufactured by Todorokisangyo Co., Ltd.) in which the reactor was provided with a stirrer, a dropping device exclusive for monomers, a dropping device exclusive for an initiator, a temperature sensor, and a circulation device having a nitrogen inlet device provided on the upper portion thereof, 240 parts of propylene glycol monomethyl ether acetate (PGMAc) and 240 parts of isobutyl alcohol (iBuOH) were charged, and the inside of the reactor was purged with nitrogen under stirring. The temperature was increased to 80°C while the inside of the reactor was kept in a nitrogen atmosphere, and then a mixture of 240 parts of styrene, 198.3 parts of methyl methacrylate, 360 parts of dimethylaminoethyl methacrylate, 0.8 parts of butyl acrylate, 0.8 parts of isobutyl acrylate, and 0.08 parts of methacrylic acid was added dropwise from the dropping device exclusive for monomers. In addition, a mixture of 40.0 parts of "ABN-E (registered tradename)" (effective component 2,2'-azobis(2-methylbutyronitrile, manufactured by Japan Finechem Co., Ltd.) and 312 parts of PGMAc was added dropwise from the dropping device exclusive for an initiator. Both mixtures were added over 5 hours. Two hours after the completion of dropping, a mixture of 1.6 parts of "Perbutyl O (registered tradename)" (effective component, tert-butyl peroxy-2-ethylhexanoate, manufactured by NOF Corporation) and 8.0 parts of PGMAc was added to the reactor. Then, reaction was continued for 4 hours at the same temperature, and the nonvolatile content was adjusted to 50%, thereby producing a PGMAc/iBuOH solution of a cationic group-containing organic polymer compound (KR-1) (solid amine value 160.8 mgKOH/g).

(Production Example 5) Production of cationic group-containing organic polymer compound (KR-2)

A PGMAc/iBuOH solution of a cationic group-containing organic polymer compound (KR-2) having a nonvolatile content of 50% (solid amine value 60 mgKOH/g) was produced by the same method as in Production Example 4 except that 465.68 parts of styrene and 134.32 parts of dimethylaminoethyl methacrylate were used.

(Production Example 6) Production of cationic group-containing organic polymer compound (KR-3)

A PGMAc/iBuOH solution of a cationic group-containing organic polymer compound (KR-3) having a nonvolatile content of 50% (solid amine value 250 mgKOH/g) was produced by the same method as in Production Example 4 except that 160 parts of styrene, 78.64 parts of methyl methacrylate, and 559.68 parts of dimethylaminoethyl methacrylate were used.

(Production Example 7) Production of polyarylene sulfide resin (meta 15% PPS (also expressed as "para-meta PPS copolymer" in the specification))

In a 150-L autoclave, 19.222 kg of flake-shaped $Na_2S$ (60.9% by mass) and 45.0 kg of N-methyl-2-pyrrolidone (may be abbreviated as "NMP" hereinafter) were charged. The temperature was increased to 204°C under stirring in a nitrogen stream, and 4.438 kg of water was distilled off (amount of remaining water of 1.14 moles per mole of $Na_2S$). Then, the autoclave was closed and cooled to 180°C, and 21.7201 kg of p-dichlorobenzene (abbreviated as "p-DCB" hereinafter), 3.8330 kg (15 mol% relative to the total of m-DCB and p-DCB) of m-dichlorobenzene (abbreviated as "m-DCB" hereinafter), and 18.0 kg of NMP were charged. The pressure was increased to 1 $kg/cm^2G$ by using nitrogen gas at a liquid temperature of 150°C, and the temperature increase was started. Under stirring for 3 hours at a liquid temperature of 220°C, the autoclave was cooled by flowing a refrigerant of 80°C through a coil wound on the outside of the upper portion of the autoclave. Then, the temperature was increased, and stirring was performed for 3 hours at a liquid temperature of 260°C. Next, the temperature was decreased, and cooling of the upper portion of the autoclave reaction was stopped. The liquid temperature was kept constant so as not to be decreased during cooling of the upper portion of the autoclave. The maximum pressure during reaction was 8.91 $kg/cm^2G$.

The resultant slurry was two times filtered and washed with hot water by a usual method to produce a filter cake containing about 50% by mass of water. Next, 60 kg of water and 100 g of acetic acid were added to the filter cake to again form a slurry, which was then stirred at 50°C for 30 minutes and then again filtered. In this case, the pH of the slurry was 4.6. Then, the operation of adding 60 kg of water to the filter cake, stirring the resultant mixture for 30 minutes, and then again filtering the mixture was repeated five times. Then, the resultant filter cake was dried at 120°C for 4.5 hours in a hot-air circulating dryer, producing a white powder of para-meta PPS copolymer. The resultant para-meta PPS copolymer had a melting temperature of 230°C, a linear form, and a V6 melt viscosity of 13 [Pa·s].

Next, a description is made of methods for measuring a dispersed particle diameter and sedimentation of a polyarylene sulfide dispersion liquid produced in each of examples and comparative examples described below.

[Measurement of dispersed particle diameter]

The D50 particle diameter of the resultant polyarylene sulfide dispersion liquid was measured as a dispersed particle diameter by using "MT-3300EXII" (laser Doppler-type particle size distribution meter manufactured by Nikkiso Co., Ltd.).

[Visual confirmation of sedimentation]

The resultant polyarylene sulfide dispersion liquid was allowed to stand for 24 hours, and then a supernatant was confirmed. When the supernatant was transparent, it was decided that sedimentation occurred, while the supernatant was not confirmed, it was decided that no sedimentation occurred.

(EXAMPLE 1)

•Step (A) [dissolution step]

In an autoclave (A) having an openable valve provided on the lower portion thereof, 10 g of PAS-1 produced in Production Example 1 and 490 g of NMP were placed. Nitrogen was passed through the system, and the inner temperature was increased to 250°C under stirring and pressure, followed by stirring for 30 minutes.

•Step (B) [crystallization step]

In an autoclave [2] connected, through a pie, to the openable valve of the autoclave used in the step (A), a cationic group-containing organic polymer compound aqueous solution was placed, the aqueous solution being previously prepared by mixing 1.67 g of the cationic group-containing organic polymer compound KR-1 produced in Production Example 4, 6.56 g of 2% hydrochloric acid, and 2000 g of water. The valve of the autoclave [1] was opened, and the NMP solution of PAS dissolved in the step (A) was flowed into the autoclave [2], producing a crystallization liquid in the autoclave [2]. The operation of flowing the NMP solution of PAS into the cationic group-containing organic compound aqueous solution was repeated four times, and an undissolved residue was removed from 9.64 kg of the resultant crystallization liquid by using a metal mesh with an opening size of 180 μm (pH of the resultant crystallization liquid: 3.2).

•Step (C) [base precipitation step]

A 5% aqueous potassium hydroxide solution was dropped in the crystallization liquid produced in the step (B), and pH was adjusted to 12.5 to produce a base-precipitated slurry in which PAS fine particles with the surfaces coated with the cationic group-containing organic polymer compound were flocculated (pH of the resultant liquid: 12.0).

•Step (D) [wet cake forming step]

The aqueous medium of the base-precipitated slurry produced in the step (C) was suction-filtered off, and the residue collected by filtration was washed with ion exchange water until the electric conductivity of the washing solution was 0.5 mS/cm or less, thereby producing 110.0 g of a wet cake of hydrous cationic group-containing organic polymer compound-coated PAS particles having a nonvolatile content of 30.0%.

•Step (E) [fine particle dispersion forming step]

In a stainless cup of 300 cc, 110.0 g of the wet cake of hydrous cationic group-containing organic polymer compound-coated PAS particles produced in the step (D), 4.13 g of 10% acetic acid, and 17.9 g of ion exchange water were placed, and the resultant mixture was irradiated with ultrasonic waves for 30 minutes in an ultrasonic disperser UP400ST manufactured by Hielscher Inc. (output 400 W, frequency 24 kHz), thereby producing a polyarylene sulfide fine particle dispersion (D-1). The resultant dispersion had a nonvolatile content of 25% and a dispersed particle diameter of 294 nm. Also, visual confirmation of sedimentation after standing for 24 hours showed "no sedimentation".

(EXAMPLE 2)

A PAS fine particle dispersion (D-2) having a nonvolatile content of 25% was produced by the same step (A) to step (E) as in Example 1 except that PAS-2 was used in place of PAS-1 used as polyarylene sulfide in the step (A) of Example 1. The resultant dispersion had a dispersed particle diameter of 280.1 nm. Also, visual confirmation of

sedimentation after standing for 24 hours showed "no sedimentation".

(EXAMPLE 3)

A PAS fine particle dispersion (D-3) having a nonvolatile content of 25% was produced by the same step (A) to step (E) as in Example 1 except that PAS-3 was used in place of PAS-1 used as polyarylene sulfide in the step (A) of Example 1. The resultant dispersion had a dispersed particle diameter of 300.2 nm. Also, visual confirmation of sedimentation after standing for 24 hours showed "no sedimentation".

(EXAMPLE 4)

A PAS fine particle dispersion (D-4) having a nonvolatile content of 25% was produced by the same step (A) to step (E) as in Example 1 except that NMP used in the step (A) of Example 1 was changed to 1-chloronaphthalene, and the operation of heating-dissolution was performed at a temperature of 230°C. The resultant dispersion had a dispersed particle diameter of 320.5 nm. Also, visual confirmation of sedimentation after standing for 24 hours showed "no sedimentation".

(EXAMPLE 5)

A PAS fine particle dispersion (D-5) having a nonvolatile content of 25% was produced by the same step (A) to step (E) as in Example 1 except that a cationic group-containing organic polymer compound aqueous solution was prepared by using KR-2 (1.67 g) in place of KR-1 used as the cationic group-containing organic polymer compound in the step (B) of Example 1 and using 2% hydrochloric acid in an amount of 2.45 g. The resultant dispersion had a dispersed particle diameter of 320.9 nm. Also, visual confirmation of sedimentation after standing for 24 hours showed "no sedimentation".

(EXAMPLE 6)

A PAS fine particle dispersion (D-6) having a nonvolatile content of 25% was produced by the same step (A) to step (E) as in Example 1 except that a cationic group-containing organic polymer compound aqueous solution was prepared by using KR-3 (1.67 g) in place of KR-1 used as the cationic group-containing organic polymer compound in the step (B) of Example 1 and using 2% hydrochloric acid in an amount of 4.90 g. The resultant dispersion had a dispersed particle diameter of 250.2 nm. Also, visual confirmation of sedimentation after standing for 24 hours showed "no sedimentation".

(EXAMPLE 7)

Cationic group-containing organic polymer compound-coated PAS powder particles were produced by drying, at 40°C for 12 hours under reduced pressure in a vacuum dryer, 100 g of the wet cake of hydrous cationic group-containing organic polymer compound-coated PAS particles having a nonvolatile content of 30% and produced in the step (D) of Example 1, and then grinding the cake by using a juicer mixer.

(EXAMPLE 8)

A polyarylene sulfide fine particle dispersion (D-3) having a nonvolatile content of 25% was produced by the same step (A) to step (E) as in Example 1 except that the para-meta PPS copolymer produced in Production Example 7 was used as polyarylene sulfide in the step (A) in place of the PAS-1 produced in Production Example 1. The resultant dispersion had a dispersed particle diameter of 595 nm. Also, visual confirmation of sedimentation after standing for 24 hours showed "no sedimentation".

(COMPARATIVE EXAMPLE 1)

A PAS slurry (D-7) having a nonvolatile content of 25% was produced by the same step (A) to step (E) as in Example 1 except that the temperature of 280°C in dissolution operation in the step (A) of Example 1 was changed to 30°C. The resultant slurry had a dispersed particle diameter of 5.445 μm. Also, visual confirmation of sedimentation after standing for 24 hours showed "occurrence of sedimentation", and solid-liquid separation was confirmed.

(COMPARATIVE EXAMPLE 2)

A PAS slurry (D-8) having a nonvolatile content of 25% was produced by the same step (A) to step (E) as in Example 1 except that PAS-2 was used in place of PAS-1 used as polyarylene sulfide in the step (A) of Example 1 and the temperature of 280°C in dissolution operation was changed to 30°C. The resultant slurry had a dispersed particle diameter of 11.97 μm. Also, visual confirmation of sedimentation after standing for 24 hours showed "occurrence of sedimentation", and solid-liquid separation was confirmed.

[Evaluation of electrodeposition coating]

Many applications of the dispersion produced in the present invention are considered to be developed. A description is made below of development to the coating field as an example. Electrodeposition was evaluated as an example in the coating field. Cationic electrodeposition coating is a type of a coating method having excellent corrosiveness because of no elution of a coated material. When the PAS dispersion is used as an electrodeposition liquid, the nonvolatile content can be properly adjusted with ion exchange water or the like and, if required, various additives can be added before use.

Electrodeposition coating was evaluated by using as a sample the PAS fine particle dispersion or PAS slurry produced in each of the examples and the comparative examples.

<Preparation of electrodeposition liquid>

The PAS fine particle dispersion produced in each of the examples and the comparative examples was adjusted to a nonvolatile content of 10% with ion exchange water, thereby preparing an electrodeposition liquid.

<Evaluation of electrodeposition coated material>

A cathode, an anode, and an aluminum plate were immersed in the electrodeposition liquid prepared as described above, and current was supplied at 36 V by using direct-current power supply PB80-1B (manufactured by TEXIO Co., Ltd.). Then, smoothness was determined by visually observing the aluminum plate on which polyarylene sulfide was deposited.

A: Uniform deposition without particle points was observed.
B: Few particle points were observed.
C: Many particle points were observed.

The dispersed particle diameters and evaluation results of electrodeposition coating of the PAS fine particle dispersions of Examples 1 to 6 and 8, Comparative Example 1, and Comparative Example 2 are summarized in a table below.

[Table 1]

| | Dispersed particle diameter | Visual confirmation of sedimentation | Evaluation of electrodeposition coating |
|---|---|---|---|
| Example 1 | 294.0 nm | No sedimentation | A |
| Example 2 | 280.1 nm | No sedimentation | A |
| Example 3 | 300.2 nm | No sedimentation | B |
| Example 4 | 320.5 nm | No sedimentation | A |
| Example 5 | 320.9 nm | No sedimentation | A |
| Example 6 | 250.2 nm | No sedimentation | A |
| Example 8 | 595.0 nm | No sedimentation | B |
| Comparative Example 1 | 5.445 μm | Occurrence of sedimentation | C |
| Comparative Example 2 | 11.97 μm | Occurrence of sedimentation | C |

Table 1 indicates that the PAS fine particles produced in the present invention have excellent dispersibility and also have good smoothness of an electrodeposition-coated material.

## Claims

1. A polyarylene sulfide dispersion comprising polyarylene sulfide particles, a cationic group-containing organic polymer compound, an acid, and an aqueous medium, wherein the polyarylene sulfide particles are coated with the cationic group-containing organic polymer compound.

2. The polyarylene sulfide dispersion according to Claim 1, wherein the main skeleton of the cationic group-containing organic polymer compound is at least one selected from the group consisting of a (meth)acrylate ester resin, a (meth)acrylate ester-styrene resin, a (meth)acrylate ester-epoxy resin, a vinyl resin, a urethane resin, and a polyamide-imide resin.

3. The polyarylene sulfide dispersion according to Claim 1 or 2, wherein the cationic group-containing organic polymer compound has an amine value of 40 to 300 mgKOH/g.

4. The polyarylene sulfide dispersion according to any one of Claims 1 to 3, wherein an acid used for neutralizing a cationic group in the cationic group-containing organic polymer compound is at least one acid selected from the group consisting of inorganic acids, sulfonic acid, carboxylic acids, and vinylic carboxylic acids.

5. The polyarylene sulfide dispersion according to any one of Claims 1 to 4, wherein the dispersed particle diameter of the polyarylene sulfide particles in the polyarylene sulfide dispersion is 1 μm or less.

6. Polyarylene sulfide fine particles coated with a cationic group-containing organic polymer compound.

7. A method for producing a polyarylene sulfide dispersion, comprising:

   a step (A) of heating polyarylene sulfide in an organic solvent to prepare a solution;
   a step (B) of adding the polyarylene sulfide solution prepared in the step (A) to an aqueous resin solution prepared by adding and dissolving a cationic group-containing organic polymer compound in water, forming polyarylene sulfide fine particles;
   a step (C) of depositing the cationic group-containing organic polymer compound on the surfaces of the polyarylene sulfide fine particles by reacting the polyarylene sulfide fine particles produced in the step (B) with a base, thereby precipitating polyarylene sulfide particles coated with a cationic group-containing organic polymer;
   a step (D) of filtering out and washing the polyarylene sulfide particles coated with the cationic group-containing organic polymer produced in the step (C), thereby producing a wet cake of the polyarylene sulfide particles coated with a hydrous cationic group-containing organic polymer; and
   a step (E) of reacting the wet cake of the polyarylene sulfide particles coated with the hydrous cationic group-containing organic polymer produced in the step (D) with an acid, thereby producing a dispersion including the polyarylene sulfide particles coated with the cationic group-containing organic polymer compound.

8. The method for producing a polyarylene sulfide dispersion according to Claim 7, wherein the organic solvent used in the step (A) is at least one organic solvent selected from N-methyl-2-pyrrolidone, 1-chloronaphthalene, and 1,3-dimethyl-2-imidazolidinone.

9. A method for producing polyarylene sulfide powder particles, comprising:

   a step (A) of heating polyarylene sulfide in an organic solvent to prepare a solution;
   a step (B) of adding the polyarylene sulfide solution prepared in the step (A) to an aqueous resin solution prepared by adding and dissolving a cationic group-containing organic polymer compound in water, forming polyarylene sulfide fine particles;
   a step (C) of depositing the cationic group-containing organic polymer compound on the surfaces of the polyarylene sulfide fine particles produced in the step (B) by reacting the polyarylene sulfide fine particles with a base, thereby precipitating polyarylene sulfide particles coated with a cationic group-containing organic polymer;
   a step (D) of filtering out and washing the polyarylene sulfide particles coated with the cationic group-containing organic polymer produced in the step (C), thereby producing a wet cake of the polyarylene sulfide particles

coated with a hydrous cationic group-containing organic polymer; and

a step (F1) of drying the wet cake of the polyarylene sulfide particles coated with the hydrous cationic group-containing organic polymer produced in the step (D), thereby producing polyarylene sulfide powder particles coated with the cationic group-containing organic polymer.

**10.** A method for producing polyarylene sulfide powder particles, comprising:

a step (A) of heating polyarylene sulfide in an organic solvent to prepare a solution;

a step (B) of adding the polyarylene sulfide solution prepared in the step (A) to an aqueous resin solution prepared by adding and dissolving a cationic group-containing organic polymer compound in water, forming polyarylene sulfide fine particles;

a step (C) of depositing the cationic group-containing organic polymer compound on the surfaces of the polyarylene sulfide fine particles produced in the step (B) by reacting the polyarylene sulfide fine particles with a base, thereby precipitating polyarylene sulfide particles coated with a cationic group-containing organic polymer;

a step (D) of filtering out and washing the polyarylene sulfide particles coated with the cationic group-containing organic polymer produced in the step (C), thereby producing a wet cake of the polyarylene sulfide particles coated with a hydrous cationic group-containing organic polymer;

a step (E) of reacting the wet cake of the polyarylene sulfide particles coated with the hydrous cationic group-containing organic polymer produced in the step (D) with an acid, thereby producing a dispersion including the polyarylene sulfide particles coated with the cationic group-containing organic polymer compound; and

a step (F2) of drying the dispersion including the polyarylene sulfide particles coated with the cationic group-containing organic polymer compound produced in the step (E) to produce polyarylene sulfide powder particles coated with the cationic group-containing organic polymer.

**11.** The method for producing polyarylene sulfide powder particles according to Claim 9 or 10, wherein the organic solvent used in the step (A) is at least one organic solvent selected from N-methyl-2-pyrrolidone, 1-chloronaphthalene, and 1,3-dimethyl-2-imidazolidinone.

**12.** The method for producing a polyarylene sulfide dispersion according to Claim 7, wherein after the step (B), a dispersion liquid of the polyarylene sulfide fine particles produced in the step (B) is mechanically ground.

**13.** The method for producing polyarylene sulfide powder particles according to Claim 9 or 10, wherein after the step (B), a dispersion liquid of the polyarylene sulfide fine particles produced in the step (B) is mechanically ground.

**14.** An electrodeposition liquid comprising the polyarylene sulfide dispersion according to Claim 1, 2, 3, 4, or 5.

**15.** A coating material using the polyarylene sulfide dispersion according to Claim 1, 2, 3, 4, or 5.

**INTERNATIONAL SEARCH REPORT**

International application No. PCT/JP2016/062352

A. CLASSIFICATION OF SUBJECT MATTER
*C08J3/16*(2006.01)i, *C08J3/02*(2006.01)i, *C08J3/12*(2006.01)i, *C08L81/02*(2006.01)i, *C08L101/02*(2006.01)i, *C09D5/02*(2006.01)i, *C09D181/04*(2006.01)i

According to International Patent Classification (IPC) or to both national classification and IPC

B. FIELDS SEARCHED

Minimum documentation searched (classification system followed by classification symbols)
C08J3/16, C08J3/02, C08J3/12, C08L81/02, C08L101/02, C09D5/02, C09D181/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-209344 A (Nippon Paper Chemicals Co., Ltd.), 24 September 2010 (24.09.2010), claims; paragraphs [0026] to [0027], [0030] to [0033], [0035]; examples & WO 2001/007518 A1 | 1-15 |
| A | JP 2010-084137 A (Nippon Paper Chemicals Co., Ltd.), 15 April 2010 (15.04.2010), (Family: none) | 1-15 |
| A | JP 2004-075820 A (Dainippon Ink and Chemicals, Inc.), 11 March 2004 (11.03.2004), (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 June 2016 (10.06.16) | 21 June 2016 (21.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/062352

C (Continuation). DOCUMENTS CONSIDERED TO BE RELEVANT

| Category* | Citation of document, with indication, where appropriate, of the relevant passages | Relevant to claim No. |
|---|---|---|
| A | JP 61-037811 A (Goo Chemical Co., Ltd.), 22 February 1986 (22.02.1986), (Family: none) | 1-15 |
| P,A | WO 2015/178105 A1 (DIC Corp.), 26 November 2015 (26.11.2015), (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009173878 A
- JP 2011122108 A
- JP 2012177010 A
- JP 7228699 A
- WO 2010058713 A